# FASCICULE DE BREVET EUROPEEN

(11) **EP 3 792 144 B1**
(45) Date de publication et mention de la délivrance du brevet: **12.06.2024**
(21) Numéro de dépôt: 20193214.2
(22) Date de dépôt: 27.08.2020
(51) Int. Cl.: B62B 1/20, B62B 5/06

(54) **BROUETTE EQUIPEE AVEC UN SYSTEME DE PREHENSION PIVOTANT**
SCHUBKARRE AUSGESTATTET MIT EINEM SCHWENKBAREN GREIFSYSTEM
WHEELBARROW PROVIDED WITH A PIVOTING GRIPPING SYSTEM

(30) Priorité: 16.09.2019 FR 1910200
(43) Date de publication de la demande: 17.03.2021
(73) Titulaire: CDH Group, 27610 Romilly sur Andelle (FR)
(72) Inventeur: ESTEVE, Christophe, 27610 Romily-sur-Andelle (FR)
(74) Mandataire: Demulsant, Xavier

(56) Documents cités:
- DE-A1-102014 002 237
- US-A- 5 794 307
- US-A1- 2011 272 924
- US-A1- 2017 113 709

## Description

L'invention a trait au domaine des brouettes, et plus particulièrement des brouettes munies de poignées pivotantes.

Par brouette, il faut entendre un appareil de manutention monté sur une ou plusieurs roues, muni de deux brancards permettant sa préhension par l'utilisateur, et comprenant un contenant destiné à recevoir une charge à déplacer d'un endroit à un autre.

Le déplacement d'une charge par l'intermédiaire d'une brouette impose à l'utilisateur des efforts physiques non négligeables. De tels efforts sont par exemple exercés lorsque l'utilisateur soulève la brouette chargée à l'aide des poignées, et entraîne l'ensemble en déplacement. Simultanément, l'utilisateur doit maintenir l'équilibre de la charge en agissant sur les poignées. Par ailleurs, lors du déversement des charges transportées, l'utilisateur est en général amené à basculer le contenant vers l'avant, en soulevant les poignées vers le haut, ce qui sollicite fortement les parties supérieures du corps de l'utilisateur.

De tels mouvements et efforts, en particulier lorsqu'ils sont effectués de manière répétée, peuvent être générateurs de troubles musculo-squelettiques (TMS), qui peuvent être responsables de la survenance de maladies professionnelles identifiées comme telles dans les *tableaux n°57, 79 et 98 du n°72-1010 du 2 novembre 1972, mis à jour par le décret n°2012-937 du 1er août 2012.*

Selon le rapport de gestion 2017 de l'Assurance Maladie - Risques professionnels, environ 40 000 nouvelles personnes sont chaque année prises en charge pour des TMS d'origine professionnelle.

Selon ce rapport, en 2017, plus de 90% des syndromes de TMS concernent les membres supérieurs, en particulier l'avant-bras (main, poignet, doigts), le coude, et l'épaule. Selon ce rapport, la branche du bâtiment et des travaux publics est l'une des branches ayant un indice de fréquence le plus élevé.

Outre la souffrance physique et morale qu'elles déclenchent pour les personnes qui en sont victimes, les maladies professionnelles ont un coût économique important, du fait des arrêts de travail occasionnés.

Ainsi, selon *les Statistiques de Sinistralité 2017 tous CTN et par CTN 2017, CNAM, fiche maladie professionnelles année 2017, branche CTN-*B, 1 156 330 journées de travail ont été perdues suite à des affections péri-articulaires.

Les facteurs favorisant la survenue de TMS sont multiples, et sont souvent classés en trois composantes principales, à savoir des facteurs organisationnels liés à l'organisation du travail, des facteurs psychosociaux se référant à la qualité de l'environnement de travail tel que perçu par les travailleurs, et des facteurs biomécaniques ou physiques, portant sur les contraintes physiques au travail (voir par exemple Thèse Herquelot, Facteurs de risque professionnels des troubles musculos-squelettiques aux coudes et aux genoux, 2015*).*

Afin d'agir sur les facteurs biomécaniques, plusieurs actions législatives et réglementaires ont été entreprises.

Concernant la charge transportée, le code du travail impose qu'une charge supérieure à 55 kg ne peut pas être portée par un individu de sexe masculin sans avis médical, la charge maximale ne pouvant dans un tel cas excéder 105 kg. Pour un individu de sexe féminin, la charge maximale est rapportée à 25 kg, et 40 kg avec une brouette, le poids de la brouette compris.

Par ailleurs, la norme NF X35-109 relative à l'ergonomie dans la manutention manuelle de charges qui définit des valeurs de référence, applicable indistinctement aux hommes et aux femmes âgées de 18 à 65 ans recommande une valeur de 15 kg de charge par opération pour des activités de soulever/porter, limitée à 7.5 tonnes par jour par personne lorsqu'il apparaît qu'il n'est pas possible de supprimer les opérations de manutention manuelles.

Pour des raisons pratiques, le suivi strict de telles normes peut s'avérer complexe à réaliser sur chantier.

Aussi, il est recherché d'agir sur l'ergonomie du poste du travail et des outils, de sorte à éviter la réalisation de mouvements pouvant entraîner la survenue de TMS. Par exemple, il a été identifié que les positions articulaires extrêmes combinées à des efforts excessifs et répétitifs étaient des facteurs favorisant l'apparition de TMS.

De manière à améliorer l'ergonomie des brouettes et permettre de diminuer la charge portée par l'utilisateur, des solutions ont été développées, en particulier pour l'opération de déversement. En effet, le déversement de la charge impose à l'utilisateur, pour permettre de basculer la brouette, de lever les bras tout en tournant simultanément les poignets.

Afin de permette de faciliter un tel déversement, et permettre à l'utilisateur d'éviter une sollicitation trop importante des poignets, le document US 5153966 (Godwin) décrit une poignée de brouette présentant une forme de boucle. De cette manière, l'utilisateur peut soulever la brouette, et maintenir la brouette en position de déchargement, sans plier les poignets. Cependant, l'utilisateur doit plier les poignets pour soulever la brouette, ou alors modifier la position de ses poignets pendant le déchargement.

Le document US 5799960 (Davis) décrit une brouette comprenant un mécanisme de préhension muni de poignées rotatives montées perpendiculairement aux extrémités des brancards, qui peuvent être reliées entre elles, formant une barre transversale. Ainsi, lors de l'opération de déversement, l'utilisateur n'a pas besoin de pivoter ses poignets. Cependant, l'usage de poignées s'étendant transversalement a pour effet d'exercer une charge tendant à la flexion du poignet. Une telle flexion du poignet peut être contraignante, et entraîner le risque de survenue de TMS si la charge transportée est trop importante. Par ailleurs, les poignées en saillie présentent l'inconvénient de créer des points d'accrochage qui peuvent être gênants pour l'utilisateur. L'utilisation d'une barre transversale peut créer un obstacle lors de la manipulation de la brouette.

La demanderesse commercialise sous l'appellation "Flexiup" une brouette ergonomique munie de poignées basculantes. De telles poignées sont chacune indépendamment liées en rotation à chaque brancard de la brouette. De telles poignées comprennent une partie de préhension, permettant à l'utilisateur de saisir la poignée, et une partie de liaison, la partie de liaison étant reliée au brancard par l'intermédiaire d'un axe de rotation. Aussi, les poignées basculantes évoluent entre une position relevée, les parties de liaisons étant en butée contre l'extrémité du brancard, de sorte à permettre le déplacement de la brouette, et une position abaissée utilisée lors du basculement de la brouette lors du déchargement.

De telles poignées permettent de limiter l'effort de déversement. Cependant, il a été constaté que lors du déplacement de la brouette, les poignées peuvent pivoter lorsqu'un utilisateur se place par exemple dans un virage.

Le document US 2011/272924 se rapporte aux brouettes comprenant un frein et un mécanisme de verrouillage de la cuve. Le frein maintient la roue immobile pendant le déversement de la brouette et aide au mouvement sur des surfaces inclinées. L'actionnement d'une gâchette permet le pivotement des brancards par rapport au reste du châssis, les poignées passant d'une position horizontale à une position sensiblement verticale.

Le document DE 102014002237 décrit une brouette comprenant un ensemble pied et brancards monté pivotant par rapport au support de cuve, et à roue pivotante, la roue pouvant être placée parallèlement à la cuve, en position de stockage de la brouette, par exemple dans le coffre d'un véhicule.

L'invention se propose de répondre aux inconvénients précités.

Un premier objectif est de proposer un système de préhension destiné à être installé sur une brouette, le système de préhension permettant de limiter l'apparition de TMS.

Un deuxième objectif est de proposer un tel système de préhension qui, lorsqu'il est installé sur une brouette, est utilisable sans apprentissage particulier, et n'affecte pas la maniabilité de la brouette.

Un troisième objectif est de proposer un tel système de préhension simple d'obtention.

Un quatrième objectif est de proposer une brouette munie d'un tel système de préhension.

A cet effet, il est proposé, en premier lieu, un système de préhension destiné à être monté en rotation sur des brancards d'une brouette, le système de préhension étant apte à évoluer entre une position de transport et une position de déversement, le système de préhension comprenant une première poignée et une deuxième poignée, chacune des poignées comprenant un moyen de préhension, un moyen de fixation s'étendant en saillie à partir du moyen de préhension, le moyen de fixation étant destiné à être monté en liaison pivot sur un brancard, les poignées étant solidaires entre elles.

Un tel système de préhension permet notamment un déversement de la charge de la brouette en limitant le risque d'apparition de TMS. De plus, la manipulation de la brouette lors du roulage de la brouette n'est pas affectée par l'utilisation du système de préhension.

Diverses caractéristiques supplémentaires peuvent être prévues:
- les poignées sont reliées entre elles par l'intermédiaire d'un moyen de liaison s'étendant sensiblement transversalement, de sorte à former avec les poignées une structure monobloc ;
- le moyen de fixation comprend une portion proximale et une portion distale libre, le moyen de préhension comprenant un segment de saisie et un segment de liaison, la portion distale libre s'étendant à partir du segment de liaison en s'étendant parallèlement au segment de saisie ;
- le moyen de liaison comprend une première section courbée, une deuxième section courbée, et une section rectiligne disposée entre la première section courbée et la deuxième section courbée, la première section courbée étant solidaire du moyen de préhension de la première poignée, la deuxième section courbée étant solidaire du moyen de préhension de la deuxième poignée, la première section courbée et la deuxième section courbée s'étendant dans la même direction, de sorte que le moyen de liaison et les moyens de préhension présentent ensemble une forme sensiblement courbée.

Selon l'invention telle que définie à la revendication 1, il est proposé une brouette comprenant un châssis comprenant une paire de brancards, une roue, un contenant, un système de préhension tel que présenté ci-dessus. Des modes de réalisation préférés de l'invention sont définis dans les revendications dépendantes.

Selon un mode de réalisation, un espace interne est définit entre le moyen de préhension de la première poignée et le moyen de préhension de la deuxième poignée, les moyens de fixation faisant saillie de chaque moyen de préhension au sein de l'espace interne, de sorte à ce que lorsque le système de préhension est en position de transport, le système de préhension entre en contact avec un brancard.

Selon un mode de réalisation, le brancard comprend une partie extrême, le moyen de fixation est monté pivotant sur la partie extrême.

Selon un mode de réalisation, la distance selon une direction transversale entre le moyen de fixation de la première poignée et le moyen de fixation de la deuxième poignée est égale à la distance selon une direction transversale entre les deux brancards.

Selon un mode de réalisation, le segment de saisie s'étend parallèlement à la partie extrême lorsque le système de préhension est en position de transport.

Selon un mode de réalisation, le moyen de fixation, les brancards, le moyen de liaison sont formés à partir de section tubulaire profilée de diamètre identique.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 représente une vue schématique en perspective d'une brouette équipée d'un système de préhension,
- la figure 2 représente une vue schématique de dessus d'une brouette équipée d'un système de préhension,

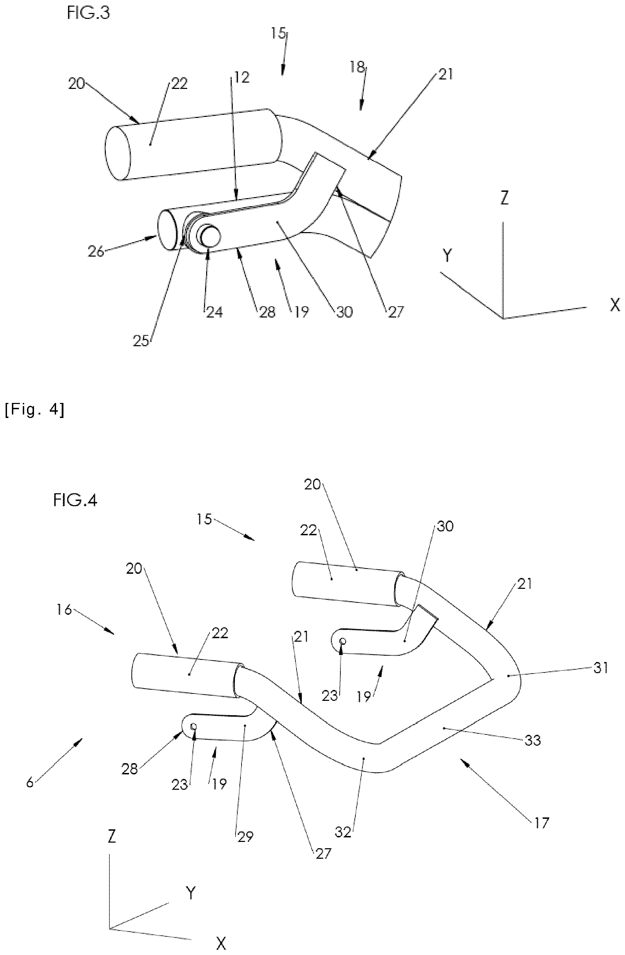

- la figure 3 représente une vue schématique en perspective du détail III de la figure 1 du système de préhension monté sur la brouette,
- la figure 4 représente une vue schématique en perspective du système de préhension seul,
- la figure 5 représente une vue schématique d'une brouette munie du système de préhension, la brouette étant en configuration de roulage,
- la figure 6 représente une vue schématique d'une brouette munie du système de préhension, la brouette étant en configuration de déversement.

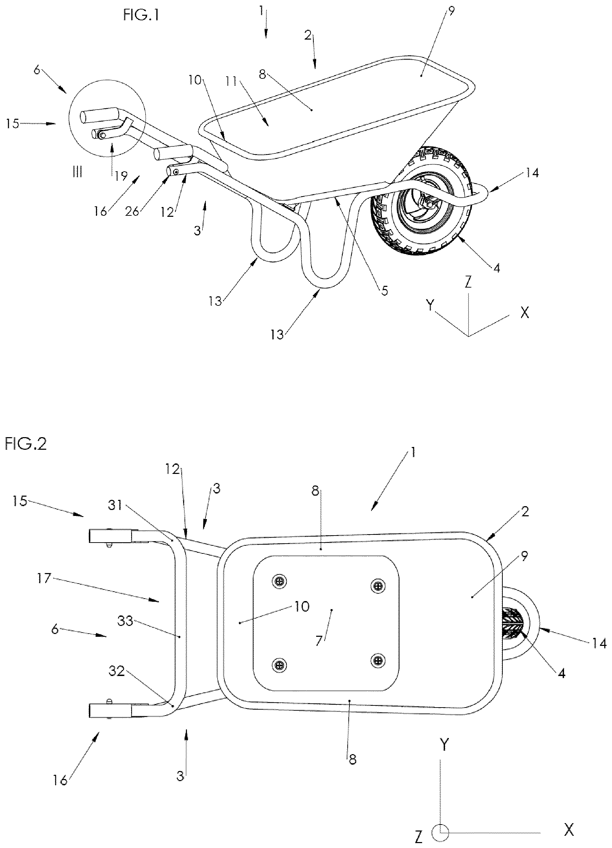

L'on se réfère à la figure 1 représentant un exemple de brouette **1** comprenant plusieurs sous-ensemble, à savoir un contenant **2,** deux brancards **3,** une roue **4,** un châssis **5,** ainsi qu'un système **6** de préhension.

Dans l'exemple de réalisation représenté, le contenant **2** est solidaire du châssis, et le châssis est solidaire des brancards **3.**

La roue **4** est montée pivotante sur les brancards **3,** ce qui permet de faire rouler la brouette 1, et de transporter une charge, par exemple des matériaux (terre, gravats, sable) ou des outils à un site de destination.

Le système **6** de préhension est avantageusement monté pivotant sur les brancards **3,** le système **6** de préhension évoluant entre une position de transport, permettant le déplacement de la brouette **1** par préhension du système **6** de préhension, et une position de déversement, facilitant le déversement de la charge transportée.

Dans l'exemple de réalisation représenté figure 1, la brouette **1** est en configuration de chargement. Dans une telle configuration, la brouette **1** repose sur le sol (non représenté sur la figure 1), les brancards **3** et la roue **4** offrant chacun des points de contact avec le sol, de sorte à être en équilibre. Dans une telle configuration, la brouette **1** n'est pas soulevée par l'utilisateur, et le contenant **2** peut recevoir une charge.

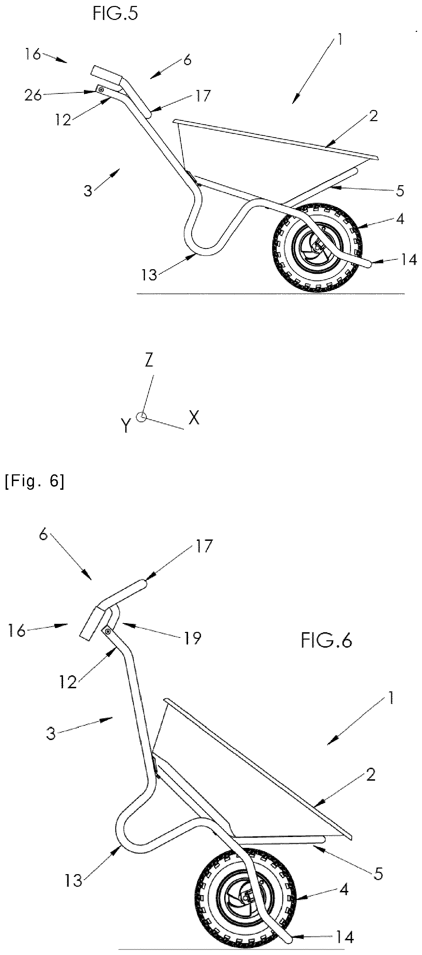

Dans l'exemple de réalisation représenté figure 5, la brouette **1** est en configuration de roulage. Dans une telle configuration, l'utilisateur (non représenté) soulève la brouette **1** par l'intermédiaire du système **6** de préhension, de sorte à ce que la brouette définisse un angle par rapport au sol. Le système **6** de préhension, en position de transport, permet une saisie identique à une saisie d'une brouette **1** non équipée d'un tel système. La brouette **1** peut ainsi être déplacée d'un point à un autre par roulage.

Dans l'exemple de réalisation, la brouette **1** est représentée sur la figure 6 en configuration de déversement, l'utilisateur fait pivoter la brouette **1** définissant un angle avec le sol plus important qu'en configuration de roulage par rapport au sol. Le système **6** de préhension pivote de façon à se positionner en position de déversement, afin de limiter la flexion du poignet de l'utilisateur. La charge située dans la brouette **1** peut ainsi sortir du contenant **2** par glissement, et tomber par exemple sur le sol ou toute autre surface de réception.

Le contenant **2** comprend avantageusement un fond **7,** des flancs **8** latéraux, un flanc **9** avant et un flanc **10** arrière, de sorte à conférer au contenant **2** une forme de trémie munie d'une ouverture **11** afin de permettre le remplissage, le roulage et le déchargement (par exemple par versage) d'une charge de manière sécurisée.

Le contenant **2** est avantageusement réalisé en matériau métallique, par exemple acier ou alliage d'aluminium, mais dans d'autres modes de réalisation, le contenant **2** est réalisé en matériau polymère ou composite, permettant de réduire le poids de la brouette **1,** ce qui est favorable quant à la protection contre les TMS.

L'on définit par rapport à la brouette **1,** un repère orthogonal XYZ formant un trièdre, comprenant trois axes perpendiculaires deux à deux, à savoir
un axe X, définissant une direction longitudinale, horizontale,
un axe Y, définissant une direction transversale, horizontale, qui avec l'axe X définit un plan XY horizontal, sensiblement confondu avec le fond **7** lorsque la brouette est en configuration de chargement,
un axe Z, définissant une direction verticale, perpendiculaire au plan XY horizontal.

Le contenant **2** est avantageusement solidarisé sur le châssis **5** par exemple par l'intermédiaire de moyens de solidarisation tels que des vis de fixation, ou des rivets.

Dans d'autres mises en oeuvre, le contenant **2** est solidarisé au châssis par soudage.

Sans que cela soit limitatif, le châssis **5** est utilisé pour permettre la fixation d'une roue **4** et du contenant **2.** Le châssis **5** permet ainsi de renforcer le fond **7** et le flanc **9** avant du contenant **2.**

La roue **4** peut être une roue pleine, une roue gonflée ou une roue increvable. La roue **4** peut comporter des jantes, notamment métalliques, ou bien encore un flasque. La roue **4** comporte avantageusement des roulements à billes ou à rouleaux, pour un confort à l'utilisation.

Les brancards **3** comprennent avantageusement une partie **12** extrême libre à proximité de l'utilisateur, une partie **13** de pied, et une partie **14** avant permettant la fixation de la roue **4.**

Dans le mode de réalisation représenté, la partie **12** extrême libre s'étend dans une direction opposée au sol lorsque la brouette **1** est en configuration de chargement, et de roulage. De cette façon, l'utilisateur n'a pas à se baisser trop lors du soulèvement de la brouette **1** lors du passage de la configuration de chargement à la configuration de roulage.

Comme il peut être remarqué sur les figures, la brouette **1** présente un plan de symétrie, passant notamment par la roue **4** et le milieu du fond **7,** du flanc **9** avant et du flanc **10** arrière. De cette façon, l'utilisation de la brouette **1** est facilitée du fait de l'équilibre résultant d'une telle symétrie, ce qui limite le risque d'apparition de TMS.

Le système **6** de préhension comprend une première poignée **15** et une deuxième poignée **16,** avantageusement solidaires entre elles, par exemple par l'intermédiaire d'un moyen **17** de liaison. De cette façon, le déplacement de la première poignée **15** (respectivement deuxième poignée **16)** entraîne le déplacement de la deuxième poignée **16** (respectivement première poignée **15),** ce qui permet de simplifier le déplacement des poignées d'une position à une autre. Il est par ailleurs évité le pivotement des poignées **15, 16,** permettant de maintenir la maniabilité de la brouette **1.**

De manière avantageuse, les poignées **15, 16** sont solidarisées par l'intermédiaire d'un moyen **17** de liaison s'étendant sensiblement transversalement, de manière à ce que les poignées **15, 16** et le moyen **17** de liaison forment une structure monobloc. Une telle structure offre une robustesse lui permettant de reprendre les efforts exercés par la brouette **1** chargée. De plus, une telle structure permet que le système 6 de préhension n'ait pas d'impact quant à la manipulation de la brouette **1** en configuration de roulage, en particulier pour le roulage en virage.

Chacune des poignées **15, 16** comprend avantageusement un moyen **18** de préhension, permettant notamment la saisie du système **6** de préhension, et un moyen **19** de fixation s'étendant en saillie à partir du moyen **18** de préhension, le moyen **19** de fixation permettant de relier le système **6** de préhension aux brancards **3.**

Le moyen **18** de préhension comprend par exemple un segment **20** de saisie et un segment **21** de liaison. Le segment **20** de saisie permet la préhension du système **6** de préhension par la main de l'utilisateur, le segment de liaison permettant de relier une des poignées **15, 16** au moyen **17** de liaison.

Le segment **20** de saisie s'étend avantageusement parallèlement à la partie **12** extrême libre du brancard **3,** lorsque le système **6** de préhension est en position de transport. De cette manière, lorsque la brouette **1** est en configuration de chargement ou en configuration de roulage, le segment **20** de saisie offre une prise identique à la prise qu'offriraient des brancards montés sur une brouette classique, c'est-à-dire non équipée d'un système **6** de préhension. Les habitudes de l'utilisateur ne sont donc pas modifiées par l'utilisation d'une brouette munie du système **6** de préhension.

Le segment **20** de saisie est avantageusement revêtu d'un embout **22,** par exemple réalisé en matériau polymère (PVC, caoutchouc synthétique), afin de donner à l'utilisateur un ressenti le plus agréable possible lors de l'action de saisie du moyen **18** de préhension, et de faciliter la manipulation du système **6** de préhension.

Le moyen **19** de fixation est avantageusement muni d'un orifice **23** permettant l'insertion d'un axe **24** traversant un trou **25** ménagé sur la partie **12** extrême d'un brancard **3.** De la sorte, l'on obtient une liaison pivot entre le système **6** de préhension et les brancards **3.** L'utilisateur peut ainsi mettre le système **6** de préhension en position de transport ou de déversement.

Avantageusement, la liaison pivot est formée sur une partie **12** extrême libre des brancards **3,** par exemple à proximité d'un bord **26.** De cette manière, la liaison pivot se situe sous le segment **20** de saisie, permettant d'éviter d'avoir un effort trop important sur les poignets lors du déversement de la brouette **1,** améliorant l'ergonomie de la brouette **1.** Le passage du système **6** de préhension de la position de transport à la position de déversement peut alors s'effectuer par pivotement dans un sens trigonométrique, autrement dit vers le bas lorsque la brouette **1** est en configuration de roulage ou de chargement. Une telle disposition est avantageuse lorsque le système **6** de préhension est en configuration de déversement, car le segment **20** de saisie peut se positionner dans une position ergonomique pour l'utilisateur.

Dans le mode de réalisation représenté, le moyen **19** de fixation comprend une portion **27** proximale et une portion **28** distale, la portion **28** distale faisant saillie de la portion **27** proximale. La portion **27** proximale fait avantageusement saillie du segment **21** de liaison. Lorsque le système **6** de préhension est en position de transport, la portion **27** proximale s'étend en direction du sol, et la portion **28** distale s'étend parallèlement au segment **20** de saisie. De cette façon, lorsque le système **6** de préhension est en position de transport, le segment **20** de saisie s'étend selon une direction sensiblement horizontale, facilitant la prise en main de la brouette **1.**

Avantageusement, les moyens **19** de fixation présentent chacun une forme de plaque, c'est-à-dire présentent une dimension transversale largement inférieure aux dimensions verticales ou longitudinales. Les moyens **19** de fixation présentant une surface **29** externe et une surface **30** interne, toutes les deux parallèles à un plan longitudinal.

Avantageusement, les surfaces **30** internes des moyens **19** de fixation sont en regard l'une de l'autre. Les surfaces **29** externes sont solidairement fixés au segment **21** de liaison, par exemple par soudage. De cette manière, lorsque le système **6** de préhension est mis en place sur les brancards **3,** le moyen **18** de préhension est situé au droit du brancard **3.** Le moyen **18** de préhension peut ainsi entrer en butée contre les brancards, lorsqu'une rotation dans le sens inverse au sens trigonométrique est appliquée. De cette façon, un effort de levage exercé par l'utilisateur a pour effet de bloquer le mouvement du système **6** de préhension, lorsque un utilisateur soulève la brouette **1** par l'intermédiaire des poignées **15, 16.**

Avantageusement, le moyen **17** de liaison comprend une première section **31** courbée, une deuxième section **32** courbée, et une section **33** rectiligne disposée entre la première section **31** courbée et la deuxième section **32** courbée. La première section **31** courbée est par exemple solidaire du moyen **18** de préhension de la première poignée **15,** la deuxième section **32** courbée est solidaire du moyen de préhension de la deuxième poignée **16,** la première section **31** courbée et la deuxième section **32** courbée s'étendant dans la même direction, de sorte que le moyen **17** de liaison et les moyens **18** de préhension présentent ensemble une forme sensiblement courbée, par exemple en U, ou fer à cheval. De cette manière, le moyen **17** de liaison est disposé directement sur le moyen 18 de préhension, la section **33** rectiligne est disposée à hauteur des poignets d'un utilisateur. Le moyen **18** de préhension ne gêne pas les mouvements de l'utilisateur, et ne vient pas gêner sur les jambes de l'utilisateur.

Avantageusement, le moyen **19** de fixation, les brancards **3,** le moyen **17** de liaison sont formés à partir de section tubulaire profilée et présentent un diamètre identique, permettant notamment une fabrication facilitée.

Dans le mode de réalisation, la brouette **1,** munie du système **6** de préhension est destinée à être commercialisée montée, l'utilisateur pouvant l'utiliser immédiatement après achat.

Dans d'autres modes de réalisation, non représentés, la brouette **1** est commercialisée en pièces détachée (vente en kit), l'utilisateur final se chargeant d'assembler l'ensemble des pièces. La brouette **1** présente ainsi un colisage compact, ce qui est par exemple favorable pour le transport et le stockage.

L'on décrit à présent un exemple d'utilisation d'une brouette **1** munie du système **6** de préhension tel que décrit ci-dessus.

Une fois la brouette **1** chargée, l'utilisateur saisit les segments **20** de saisie des poignées **15, 16** et exerce un effort vers le haut, à l'opposé du sol. Un tel effort exerce un pivotement du système **6** de préhension, qui se met en butée contre les brancards **3.** La poursuite de l'effort entraîne la levée de la partie **13** de pied des brancards **3,** la brouette 1 étant dans une configuration de roulage, comme représenté figure 5 et apte à être déplacée.

Lorsque l'utilisateur souhaite vider le contenant **2,** il lui suffit d'exercer un effort comprenant une composante verticale et longitudinal. De manière concrète, l'utilisateur exerce un effort en levant et tirant simultanément le système de préhension. Une telle action a pour effet de faire pivoter le système **6** de préhension dans un sens trigonométrique, ce qui permet à l'utilisateur limiter la flexion de ses poignets. De ce fait, les poignets de l'utilisateur subissent un effort limité, ce qui contribue à diminuer le risque d'apparition de TMS.

Le système **6** de préhension, et la brouette **1** munie d'un tel système de préhension, trouvent des applications avantageuses dans le domaine de la construction, des travaux publics, des travaux agricoles et paysagers, que ce soit pour une utilisation dans un cadre professionnel, ou personnel.

Le système **6** de préhension tel que décrit ci-dessus, et la brouette **1** équipée d'un tel système **6** de préhension offrent de nombreux avantages, en particulier:
- un encombrement réduit, ce qui limite la masse du système **6** de préhension, et limite l'impact sur la masse totale de la brouette **1,**
- une fabrication simple, ne nécessitant pas un outillage autre que celui pour fabriquer une brouette **1,**
- une utilisation ergonomique de la brouette **1** munie d'un système **6** de préhension, en particulier lors du déversement de la charge,
- une facilité d'utilisation, ne nécessitant aucun apprentissage particulier.

## Revendications

1. Brouette comprenant :
un châssis (5) comprenant une paire de brancards (3),
une roue (4),
un contenant (2),
chaque brancard (3) comprenant une partie (12) extrême libre, une partie (13) de pied, et une partie (14) avant permettant la fixation de la roue (4),
un système (6) de préhension monté en rotation sur les brancards (3), le système (6) de préhension étant apte à évoluer entre une position de transport et une position de déversement, le système (6) de préhension comprenant une première poignée (15) et une deuxième poignée (16), chacune des poignées (15, 16) comprenant:
- un moyen (18) de préhension, comprenant un segment (20) de saisie permettant la préhension du système (6) de préhension par la main de l'utilisateur,
- un moyen (19) de fixation s'étendant en saillie à partir du moyen (18) de préhension, le moyen (19) de fixation étant monté en liaison pivot sur un brancard (3),
les poignées (15, 16) sont solidaires entre elles,
**caractérisée** en que le segment (20) de saisie de chaque moyen (18) de préhension s'étendant parallèlement à la partie (12) extrême libre d'un brancard (3) lorsque le système (6) de préhension est en position de transport.

2. Brouette selon la revendication précédente, **caractérisée en ce que** les poignées **(15, 16)** sont reliées entre elles par l'intermédiaire d'un moyen **(17)** de liaison s'étendant sensiblement transversalement, de sorte à former avec les poignées **(15, 16)** une structure monobloc.

3. Brouette selon la revendication 1 ou 2, **caractérisée en ce que** le moyen **(19)** de fixation comprend une portion **(27)** proximale et une portion **(28)** distale libre, le moyen **(18)** de préhension comprenant le segment **(20)** de saisie et un segment **(21)** de liaison, la portion **(28)** distale libre s'étendant à partir du segment **(21)** de liaison en s'étendant parallèlement au segment **(20)** de saisie.

4. Brouette selon la revendication 2, **caractérisée en ce que** le moyen **(17)** de liaison comprend une première section **(31)** courbée, une deuxième section **(32)** courbée, et une section **(33)** rectiligne disposée entre la première section **(31)** courbée et la deuxième section **(32)** courbée, la première section **(31)** courbée étant solidaire du moyen **(18)** de préhension de la première poignée **(15),** la deuxième section **(32)** courbée étant solidaire du moyen (18) de préhension de la deuxième poignée **(16),** la première section **(31)** courbée et la deuxième section **(32)** courbée s'étendant dans la même direction de sorte que le moyen **(17)** de liaison et les moyens **(18)** de préhension présentent ensemble une forme sensiblement courbée.

5. Brouette selon l'une quelconque des revendications précédentes, **caractérisée en ce qu'**un espace interne est définit entre le moyen **(18)** de préhension de la première poignée **(15)** et le moyen **(18)** de préhension de la deuxième poignée **(16),** les moyens **(19)** de fixation faisant saillie de chaque moyen **(18)** de préhension au sein de l'espace interne, de sorte à ce que lorsque le système **(6)** de préhension est en position de transport, le système **(6)** de préhension entre en contact avec un brancard **(3).**

6. Brouette selon la revendication 5, **caractérisée en ce que** le moyen **(19)** de fixation est monté pivotant sur la partie **(12)** extrême.

7. Brouette selon la revendication précédente, **caractérisée en ce que** la distance selon une direction transversale entre le moyen **(19)** de fixation de la première poignée **(15)** et le moyen **(19)** de fixation de la deuxième poignée **(16)** est égale à la distance selon une direction transversale entre les deux brancards **(3).**

8. Brouette selon l'une quelconque des revendications précédentes, **caractérisée en ce que** le moyen **(19)** de fixation, les brancards (3), et le moyen **(17)** de liaison sont formés à partir de sections tubulaires profilées de diamètre identique.

## Patentansprüche

1. Schubkarre, umfassend:
- einen Rahmen **(5)** mit einem Paar Holme **(3),**
- ein Rad **(4),**
- einen Behälter **(2),**
- wobei jeder Holm **(3)** einen freien äußersten Teil **(12),** einen Fußteil **(13)** und einen vorderen Teil **(14)** zur Befestigung des Rades **(4)** umfasst,
- ein auf den Holmen **(3)** drehbar angebrachtes Greifsystem **(6),** wobei das Greifsystem **(6)** geeignet ist, zwischen einer Transportposition und einer Auskippposition zu wechseln, wobei das Greifsystem **(6)** einen ersten Griff **(15)** und einen zweiten Griff **(16)** umfasst, wobei jeder der Griffe **(15, 16)** umfasst:
- ein Greifmittel **(18),** das ein Greifsegment **(20)** umfasst, das das Ergreifen des Greifsystems **(6)** mit der Hand des Benutzers ermöglicht,
- ein Befestigungsmittel **(19),** das sich ab dem Greifmittel **(18)** hervorragend erstreckt, wobei das Befestigungsmittel **(19)** in Drehverbindung an einem Holm **(3)** angebracht ist, wobei die Griffe **(15,16)** fest miteinander verbunden sind,
- **dadurch gekennzeichnet, dass** sich das Greifsegment **(20)** jedes Greifmittels **(18)** parallel zum freien äußersten Teil **(12)** eines Holms **(3)** erstreckt, wenn sich das Greifsystem **(6)** in Transportposition befindet.

2. Schubkarre nach vorhergehendem Anspruch, **dadurch gekennzeichnet, dass** die Griffe **(15,16)** durch ein sich im Wesentlichen quererstreckendes Verbindungsmittel **(17)** miteinander verbunden sind, so dass mit den Griffen **(15, 16)** eine einteilige Struktur gebildet wird.

3. Schubkarre nach Anspruch 1 oder 2, **dadurch gekennzeichnet, dass** das Befestigungsmittel **(19)** einen proximalen Abschnitt **(27)** und einen freien distalen Abschnitt **(28)** umfasst, wobei das Greifmittel **(18)** das Greifsegment **(20)** und ein Verbindungssegment **(21)** umfasst, wobei sich der freie distale Abschnitt **(28)** ab dem Verbindungssegment **(21)** erstreckt, indem er sich parallel zum Greifsegment **(20)** erstreckt.

4. Schubkarre nach Anspruch 2, **dadurch gekennzeichnet, dass** das Verbindungsmittel **(17)** einen ersten gekrümmten Abschnitt **(31),** einen zweiten gekrümmten Abschnitt **(32)** und einen geraden Abschnitt **(33)** umfasst, der zwischen dem ersten gekrümmten Abschnitt **(31)** und dem zweiten gekrümmten Abschnitt **(32)** angeordnet ist, wobei der erste gekrümmte Abschnitt **(31)** fest mit dem Griffmittel **(18)** des ersten Griffs **(15)** verbunden ist, wobei der zweite gekrümmte Abschnitt **(32)** fest mit dem Greifmittel **(18)** des zweiten Griffs **(16)** verbunden ist, wobei sich der erste gekrümmte Abschnitt **(31)** und der zweite gekrümmte Abschnitt **(32)** in dieselbe Richtung erstrecken, sodass das Verbindungsmittel **(17)** und die Greifmittel **(18)** zusammen eine im Wesentlichen gekrümmte Form aufweisen.

5. Schubkarre nach einem der vorhergehenden Ansprüche, **dadurch gekennzeichnet, dass** ein innerer Raum zwischen dem Greifmittel **(18)** des ersten Griffs **(15)** und dem Greifmittel **(18)** des zweiten Griffs **(16)** definiert ist, wobei die Befestigungsmittel **(19)** aus jedem Greifmittel **(18)** innerhalb des inneren Raums herausragen, sodass, wenn sich das Greifsystem **(6)** in Transportstellung befindet, das Greifsystem **(6)** einen Holm **(3)** berührt.

6. Schubkarre nach Anspruch 5, **dadurch gekennzeichnet, dass** das Befestigungsmittel **(19)** am äußersten Teil **(12)** drehbar montiert ist.

7. Schubkarre nach vorhergehendem Anspruch, **dadurch gekennzeichnet, dass** der Abstand in Querrichtung zwischen dem Befestigungsmittel **(19)** des ersten Griffs **(15)** und dem Befestigungsmittel **(19)** des zweiten Griffs **(16)** gleich dem Abstand in Querrichtung zwischen den beiden Holmen **(3)** ist.

8. Schubkarre nach einem der vorhergehenden Ansprüche, **dadurch gekennzeichnet, dass** das Befestigungsmittel **(19),** die Holme **(3)** und das Verbindungsmittel **(17)** aus Rohrprofilabschnitten mit identischem Durchmesser gebildet sind.

## Claims

1. A wheelbarrow comprising:
- a frame **(5)** comprising a pair of poles **(3),**
- a wheel **(4),**
- a container **(2),**
- each pole **(3)** comprising a free end part **(12),** a leg part **(13),** and a front part **(14)** for attaching the wheel **(4),**
- a gripping system **(6)** rotatably mounted to the poles **(3),** the gripping system **(6)** being capable of changing between a transport position and a dumping position, the gripping system **(6)** comprising a first handle **(15)** and a second handle **(16),** each of the handles **(15, 16)** comprising:
- a gripping means **(18),** comprising a grasping segment **(20)** for gripping the gripping system **(6)** by the user's hand,
- an attachment means **(19)** extending protruding from the gripping means **(18),** the attachment means **(19)** being pivot connectingly mounted to a pole **(3),** the handles **(15, 16)** are integral with each other.
- **characterised in that** the grasping segment **(20)** of each gripping means **(18)** extends in parallel to the free end part **(12)** of a pole **(3)** when the gripping system **(6)** is in the transport position.

2. The wheelbarrow according to the preceding claim, **characterised in that** the handles **(15, 16)** are connected to each other through a connecting means **(17)** extending substantially transversely, so as to form a one-piece structure with the handles **(15, 16).**

3. The wheelbarrow according to claim 1 or 2, wherein the attachment means **(19)** comprises a proximal portion **(27)** and a free distal portion **(28),** the gripping means **(18)** comprising the grasping segment **(20)** and a connecting segment **(21),** the free distal portion **(28)** extending from the connecting segment **(21)** extending in parallel to the grasping segment **(20).**

4. The wheelbarrow according to claim 2, **characterised in that** the connecting means **(17)** comprises a first curved section **(31),** a second curved section **(32),** and a rectilinear section **(33)** disposed between the first curved section **(31)** and the second curved section **(32),** the first curved section **(31)** being integral with the gripping means **(18)** of the first handle **(15),** the second curved section **(32)** being integral with the gripping means **(18)** of the second handle **(16),** the first curved section **(31)** and the second curved section **(32)** extending in the same direction such that the connecting means **(17)** and the gripping means **(18)** together have a substantially curved shape.

5. The wheelbarrow according to any of the preceding claims, **characterised in that** an inner space is defined between the gripping means **(18)** of the first handle **(15)** and the gripping means **(18)** of the second handle **(16),** the attachment means **(19)** protruding from each gripping means **(18)** within the inner space, such that when the gripping system **(6)** is in the transport position, the gripping system **(6)** comes into contact with a pole **(3).**

6. The wheelbarrow according to claim 5, **characterised in that** the attachment means **(19)** is pivotally mounted to the end part **(12).**

7. The wheelbarrow according to the preceding claim, **characterised in that** the distance along a transverse direction between the attachment means **(19)** of the first handle **(15)** and the attachment means **(19)** of the second handle **(16)** is equal to the distance along a transverse direction between the two poles **(3).**

8. The wheelbarrow according to any of the preceding claims, **characterised in that** the attachment means **(19),** the poles **(3),** and the connecting means **(17)** are formed from profiled tubular sections with identical diameter.
